# EUROPÄISCHE PATENTSCHRIFT

(11) **EP 0 537 319 B1**
(45) Veröffentlichungstag und Bekanntmachung des Hinweises auf die Patenterteilung: **14.06.1995**
(21) Anmeldenummer: 92909517.2
(22) Anmeldetag: 30.04.1992
(51) Int. Cl.: F16L 11/12

(54) **KUNSTSTOFFROHR**
PLASTIC TUBE
TUYAU EN PLASTIQUE

(30) Priorität: 02.05.1991 HU 146191
(43) Veröffentlichungstag der Anmeldung: 21.04.1993
(73) Patentinhaber: PEST-MEGYEI MÜANYAGIPARI VALLALAT, H-2083 Solymar (HU)
(72) Erfinder: LEDERER, András, H-1025 Budapest (HU); VASBANYAI, János, H-2096 Üröm (HU); SARI, Gábor, H-2083 Solymár (HU); PELLER, István, H-2081 Piliscsaba (HU)
(74) Vertreter: Patentanwälte Ruff, Beier, Schöndorf und Mütschele
(86) Internationale Anmeldenummer: HU9200017
(87) Internationale Veröffentlichungsnummer: WO9219900

(56) Entgegenhaltungen:
- DE-A- 3 939 714
- FR-A- 2 273 217
- JP-A-63 118 225

## Beschreibung

Gegenstand der Erfindung ist ein vorwiegend für den Transport von Heizwarmwasser geeignetes Kunststoffrohr.

Eine der Grundforderungen für flüssigkeits- bzw. wasserfördernde Kunststoffrohre ist, daß die innere Wand glatt sei, damit das Entstehen von Strömungsverlusten verhindert wird und so eine laminare Strömung entstehen kann. Bei laminarer Strömung ist der Widerstandsverlust der im Rohr strömenden Flüssigkeit wegen dem günstigen Reibungsfaktor bei glatter Rohrwand am niedrigsten.

In der Praxis verwendet man diese Kunststoffrohre mit glatter Innenwand auch für Warmwasserförderung, weil bei diesen der Wärmeverlust am niedrigsten ist; so entsteht bis zur Wasserentnahmestelle kein Wärmeenergieverlust bzw. der Verlust ist nicht bedeutend.

Da bei den Rohren mit glatter Innenwand die Strömung laminar ist, verliert die beförderte Warmwasser-Flüssigkeitssäule an ihrer Fläche, d.h. am Mantel, wegen der Berührung mit dem Rohrmantel an Wärmegehalt und kühlt sich bis zum Kern gleichmäßig ab. Praktisch kann man den Wärmeverlust des im Rohr mit glatter Innenwand strömenden Warmwassers auch so erfassen, daß die Wärmeabgabe als ein konvektioneller Wärmeleitungsprozeß vor sich geht; so ist die Wärmeübertragung langsam, was bei Warmwasserversorgung ausdrücklich vorteilhaft ist.

Die nötige Druckkraft zum Befördern von Flüssigkeiten in Rohrleitungssystemen ist unter anderem von der Länge des Rohres, von der Geschwindigkeit des im Rohr strömenden Mediums sowie vom zwischen dem Medium und der Rohrwand auftretenden Reibungsfaktor abhängig. Der Reibungsfaktor ist aber bei glatter Rohrwand nicht bedeutend.

Aus dem bisherigen erscheint, daß bei den Rohrsystemen für Gebrauchswarmwasser die glatte Rohrwand ideal ist, weil einerseits in Folge der laminaren Strömung kein Wärmeverlust auftritt und andererseits der auf die Reibung rückführbare Druckkraftanspruch sich nicht erhöht.

Aus der IPC F28F 1/40 ist es bekannt, an der Innenseite rohrförmiger Bauteile als Mittel zum Vergrößern der Wärmeübertragungsfläche z.B. Rippen vorzusehen. Rippen sind in dem Kunststoffrohr der JP-A 63 118 225 schraubenförmig umlaufend und direkt aneinander angrenzend in Form eines Innengewindes ausgebildet. Zwischen den Rippen können bei strömender Flüssigkeit "Toträume" mit praktisch unbewegter Flüssigkeit entstehen, was die Wärmeübertragung nach außen beeinträchtigt. Zudem erhöht ein solches Innengewinde den Strömungswiderstand des Rohres.

Die obigen Eigenschaften sind aber bei Verwendung anderer Art nicht vorteilhaft, sie können sogar als Nachteil betrachtet werden. Bei Kunststoffrohren für Bodenheizung bedeutet dieser Umstand, daß, damit das strömende Warmwasser seinen Wärmegehalt abgeben kann, wegen der Begrenztheit der Wärmeübertragung eine lange Rohrleitung notwendig ist. Der erhöhte Weg benötigt aber erhöhte Druckkraft, was sich aber auf die Dimensionierung der Rohrwand auswirkt, d.h. das Rohr muß mit dickerer Wand ausgeführt werden, was sich wiederum auf die Wärmeabgabeumstände unvorteilhaft auswirkt, weil, wie es allgemein bekannt ist, der Kunststoff schlechte wärmeleitende Eigenschaften bzw. eher wärmeisolierende Eigenschaften hat.

Metallrohre eignen sich von ihren wärmeleitenden Eigenschaften her besser für die Verwendung als Heizungsrohre, aber der Umstand, daß sie der Korrosion nicht widerstehen, brachte die Praxis dazu, daß Kunststoffrohre, zwar mit schlechteren Wärmeabgabeeigenschaften, aber der Korrosion widerstehend und für Verkalkung weniger anfällig, als Bodenheizungsrohre verwendet werden.

Diese Erfindung möchte bei diesem Problem eine Verbesserung erreichen und hat sich die Vereinigung der vorteilhaften Eigenschaften der beiden Rohre neben der Weglassung der Nachteile als Ziel gesetzt, d.h. das Erreichen der Wärmeabgabeeigenschaften von Metallrohren mit Kunststoffrohren bei gleichzeitiger Ausschaltung der Korrosionsprobleme; anders: das Erhalten der antikorrosiven Eigenschaften der Kunststoffe bei guter Wärmeübertragung.

Die Erfindung basiert auf der Erkenntnis, daß, wenn man in einem Kunststoffrohr statt laminarer Strömung eine turbulente Strömung sichern kann, so kann man die Wärmeübergabeeigenschaften der Metallrohre annähern oder erreichen und man kann sogar den günstigen Wärmeübergabeeffekt noch erhöhen, indem bei der Rohrherstellung ein Kunststoffrohr mit guten wärmeleitenden Eigenschaften als Material des Heizrohres gewählt wird.

Obiger Zielsetzung entsprechend ist die Erfindung im wesentlichen ein Kunststoffrohr, hauptsächlich zum Transport von Heizwarmwasser, das dadurch gekennzeichnet ist, daß an der inneren Fläche des, vorzugsweise mit Strangpressen hergestellten, Kunststoffrohres gestaffelte oder kontinuierliche Rippen angebracht und vorzugsweise in Schraubengewindeform an der inneren Wand des Rohres ausgebildet sind, wobei zwischen den Rippen ein Abstand angeordnet ist und die Rippen in Richtung der Strömung eine Aufschlagsfläche sowie eine sich in spitzem Winkel zur inneren Fläche der Rohrwand anpassende Ableitfläche aufweisen.

Bei einer vorteilhaften Ausführungsform paßt sich die Aufschlagsfläche der Rippen an die innere Rohrwand in einem stumpfen Winkel an und die Ableitfläche mit einem spitzen Winkel.

Die Ausbildung der Rippen kann nach einer anderen Ausführung auch so sein, daß sowohl die Aufschlagsfläche, als auch die Ableitungsfläche parallel oder annähernd parallel zueinander sind, aber die Ausbildung der Rippen kann nach einer weiteren Ausführung auch so sein, daß der Querschnitt der Rippen ein gleichschenkliges Dreieck bildet.

In jedem Falle wird die Wärmeübergabefähigkeit mit einer Ausführungsform verbessert, bei der der Grundstoff des Kunststoffrohres gute wärmeleitende Eigenschaften hat.

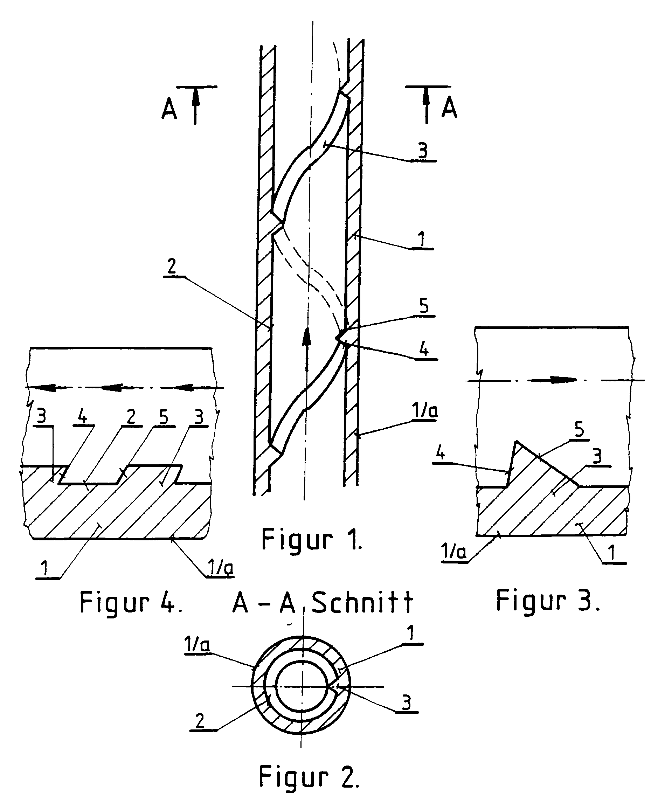

Im weiteren wird eine Ausführungsform des erfindungsgemäßen Kunststoffrohres anhand von Zeichnungen erläutert, wobei die
- Abbildung 1.: das Kunststoffrohr im Längsschnitt,
- Abbildung 2.: im Querschnitt,
- Abbildung 3.: eine asymmetrische Rippe mit Rohrwand,
- Abbildung 4.: Detailzeichnung der Rohrwand und der Rippen im Längsschnitt darstellt.

Das erfindungsgemäße Kunststoffrohr und der äußere Mantel (1a) der Rohrwand (1) wird auf herkömmliche Art und Weise hergestellt, aber an der inneren Fläche (2) sind Rippen (3) ausgebildet. Diese Rippen (3) werden vorzugsweise gleichzeitig mit dem Strangpressen an der inneren Fläche (2) der Rohrwand (1) in Schraubengewindeform ausgebildet. Infolge des Strangpressens sind die Rippen (3) kontinuierlich, aber mit Hilfe von entsprechender Herstellungstechnologie können bestimmte Rohrabschnitte ohne Rippen (3) ausgeführt werden, also die Kontinuität ist abschnittsweise weglaßbar. Dies wird z.B. in dem Fall nötig, wenn ins System solche Rohrabschnitte eingebaut werden, bei denen kein Wärmeübertragungsanspruch auftritt.

Die Rolle der Rippen (3) ist, daß an ihnen das strömende, zirkulierende Warmwasser aufschlägt. Infolge des Aufschlags kommt im inneren Raum des Rohres eine turbulente Strömung zustande. Der gezwungenen, intensiven Berührung zufolge kann die Intensität der Wärmeübertragung erhöht werden, und der Zwangsberührung mit der Rohrwand (1) zufolge beschleunigt sich der Wärmeübertragungsprozeß.

Im Interesse des Zustandebringens oder Erhöhens der Turbulenz können die Rippen (3) auch so ausgebildet sein, daß ihre, in die Richtung der Strömung fallenden, Aufschlagsflächen steil und die Ableitflächen (5) geneigt sind. Die erwähnten Rippen (3) können auch so ausgebildet sein, daß deren Aufschlagsfläche (4) und die Ableitfläche (5) miteinander parallel sind oder im Querschnitt ein gleichschenkliges Dreieck bilden. Sie können in einem gesonderten Arbeitsvorgang aufgetragen werden.

Man kann die Wärmeabgabeeigenschaften dadurch verbessern, daß die erfindungsgemäßen Kunststoffrohre aus Kunststoffarten mit guter Wärmeleitfähigkeit hergestellt werden.

Der Vorteil der Erfindung liegt darin, daß in den Wärmeabgabe-Heizrohren die Teilchen des strömenden Mediums ständig zu einer turbulenten Bewegung gezwungen sind; so kann sich im strömenden Medium keine Grenzschicht ausbilden, und die Flüssigkeit kann ihren vollen Wärmegehalt der Rohrwand übergeben.

Als Ergebnis der intensiveren Strömung kann gesichert werden, daß zur Lieferung gleicher Wärmemenge weniger Rohrfläche eingebaut werden muß, was Materialeinsparung, Senkung der Armaturenzahl und weniger Arbeitskraftanspruch bedeutet.

## Patentansprüche

1. Kunststoffrohr, vorwiegend für Transport von Heizwarm wasser, mit an der inneren Fläche (2) einer vorzugsweise durch Strangpressverfahren hergestellten Rohrwand (1) vorzugsweise in Schraubengewindeform ausgebildeten Rippen (3), die gestaffelt oder kontinuierlich angebracht sind, dadurch gekennzeichnet, daß zwischen den Rippen (3) ein Abstand angeordnet ist und daß die Rippen (3) in Richtung der Strömung eine Aufschlagsfläche (4) sowie eine sich in spitzem Winkel zur inneren Fläche (2) der Rohrwand (1) anpassende Ableitfläche (5) aufweisen.

2. Kunststoffrohr nach Anspruch 1, dadurch gekennzeichnet, daß sich die Aufschlagsfläche (4) der Rippen in stumpfem Winkel an die innere Fläche (2) der Rohrwand (1) anpasst.

3. Kunststoffrohr nach Anspruch 1, dadurch gekennzeichnet, daß die Aufschlagsfläche (4) und die Ableitfläche (5) der Rippen (3) parallele oder annähernd parallele Ebenen bilden.

4. Kunststoffrohr nach Anspruch 1, dadurch gekennzeichnet, daß die Aufschlagsfläche (4) und die Ableitfläche (5) der Rippen (3) an der inneren Fläche (2) der Rohrwand (1) ein gleichschenkliges Dreieck bilden.

5. Kunststoffrohr nach einem der vorhergehenden Ansprüche, dadurch gekennzeichnet, daß die Rohrwand (1) und die Rippen (3) aus Kunststoff mit guter Wärmeleitfähigkeit gefertigt sind.

6. Kunststoffrohr nach einem der vorhergehenden Ansprüche, dadurch gekennzeichnet, daß die Rippen (3) als gesonderte Körper z.B. mit Kleben oder Einarbeiten an die Rohrwand (1) befestigt sind.

## Claims

1. Plastic tube, mainly for transporting heating hot water, with ribs (3), preferably in screw thread form, formed on the inner surface (2) of a tube wall (1) preferably produced by extrusion and which are fitted in a staggered or continuous manner, characterized in that between the ribs (3) is provided a spacing and that the ribs (3), in the direction of the flow, have an impact surface (4) as well as a draining surface (5) fitting at an acute angle to the inner surface (2) of the tube wall (1).

2. Plastic tube according to claim 1, characterized in that the impact surface (4) of the ribs fits under an obtuse angle to the inner surface (2) of the tube wall (1).

3. Plastic tube according to claim 1, characterized in that the impact surface (4) and the draining surface (5) of the ribs (3) form parallel or approximately parallel planes.

4. Plastic tube according to claim 1, characterized in that the impact surface (4) and draining surface (5) of the ribs (3) form an isosceles triangle on the inner surface (2) of the tube wall (1).

5. Plastic tube according to one of the preceding claims, characterized in that the tube wall (1) and the ribs (3) are made from plastic having a good thermal conductivity.

6. Plastic tube according to one of the preceding claims, characterized in that the ribs (3) are fixed as separate bodies, e.g. by adhesion or recessing to the tube wall (1).

## Revendications

1. Tuyau en plastique, destiné principalement au transport d'eau chaude, pourvu, sur la face interne (2) d'une paroi du tuyau (1) fabriquée de préférence selon le procédé de l'extrusion, de nervures (3) configurées de préférence comme un filet de vis, échelonnées ou appliquées en continu, caractérisé en ce qu'un espacement est ménagé entre les nervures (3) et que les nervures (3) présentent en direction de l'écoulement une surface de battage (4) ainsi qu'une surface de déviation (5) s'adaptant à la face interne (2) de la paroi du tuyau (1) selon un angle aigu.

2. Tuyau en plastique selon la revendication 1, caractérisé en ce que la surface de battage (4) des nervures s'adapte à la face interne (2) de la paroi du tuyau (1) selon un angle obtus.

3. Tuyau en plastique selon la revendication 1, caractérisé en ce que la surface de battage (4) et la surface de dérivation (5) des nervures forment des plans parallèles ou relativement parallèles.

4. Tuyau en plastique selon la revendication 1, caractérisé en ce que la surface de battage (4) et la surface de dérivation (5) des nervures (3) forment sur la surface interne (2) de la paroi du tuyau (1) un triangle isocèle.

5. Tuyau en plastique selon l'une quelconque des revendications précédentes, caractérisé en ce que la paroi du tuyau (1) et les nervures (3) sont faites de plastique assurant une bonne conductibilité thermique.

6. Tuyau en plastique selon l'une quelconque des revendications précédentes, caractérisé en ce que les nervures (3), en tant que corps séparés, sont fixées à la paroi du tuyau (1), par exemple au moyen de colle ou par enfoncement.
